# EUROPEAN PATENT APPLICATION

(11) **EP 4 836 213 A1**
(43) Date of publication of application: **04.11.2026**
(21) Application number: 24913116.0
(22) Date of filing: 27.12.2024
(51) Int. Cl.: H02G 3/04, F16L 11/22, H02G 11/00

(54) **HOUSING MEMBER AND METHOD FOR MANUFACTURING HOUSING MEMBER**

(30) Priority: 29.12.2023 JP 2023223773
(71) Applicant: Junkosha Inc., Kasama-shi, Ibaraki 309-1603 (JP)
(72) Inventor: TAKEUCHI, Hiroshi, Kasama-shi Ibaraki 309-1603 (JP)
(74) Representative: Daub, Thomas
(86) International application number: PCT/JP2024/046424
(87) International publication number: WO 2025/143230

(57) **Abstract**

[Object] Provided is a housing member capable of achieving space saving.

[Means for Resolution] The present invention relates to a housing member including: at least a first housing portion and a second housing portion adjacent to each other, in which an outer layer of the first housing portion and an outer layer of the second housing portion each include a first fusion-bonding member and a second fusion-bonding member that face each other, the first housing portion and the second housing portion include a first non-fusion-bonding member disposed between the first fusion-bonding member and the second fusion-bonding member, the first non-fusion-bonding member is fusion-bonded to the second fusion-bonding member of the first housing portion, and the first fusion-bonding member of the second housing portion, respectively, and a second non-fusion-bonding member and a third non-fusion-bonding member are fusion-bonded to the first fusion-bonding member of the first housing portion and the second fusion-bonding member of the second housing portion, respectively.

## Description

### TECHNICAL FIELD

The present invention relates to a housing member that houses a cable, a tube, and a support member (hereinafter referred to as "cables") and a method for manufacturing a housing member. More specifically, the present invention relates to a housing member for protecting the cables used in a continuous moving body, such as a machine tool, an electronic device, an industrial robot, or a transport machine.

### BACKGROUND ART

In the continuous moving body accompanied by sliding, bending, and the like, such as a machine tool, an electronic device, an industrial robot, or a transport machine, the cables (flexible cables and hoses, such as an electric wire cable, an optical fiber cable, and a fluid supply hose, and the like) may be damaged due to torsion, friction between the cables, a tensile force and a bending force applied to the cables, and the like with the movement of the continuous moving body, and thus there is a demand for a housing member capable of preventing the damage to the cables by protecting the cables and stably supporting the cables.

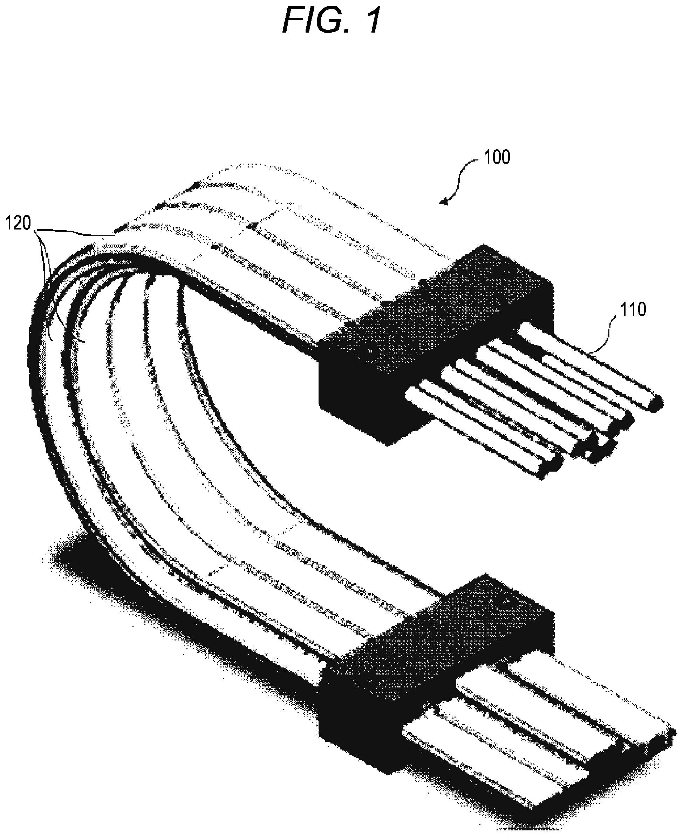

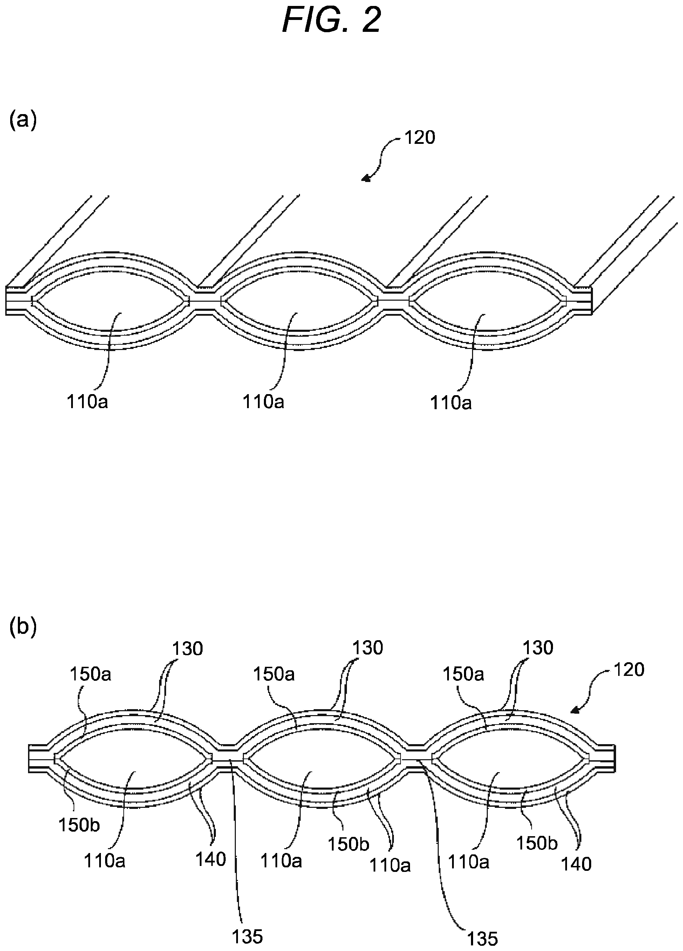

As illustrated in Figs. 1 and 2, a conventional housing member includes flexible sleeves 120 each including one or more insertion holes into which cables 110 are respectively inserted, and the flexible sleeve 120 can be usually formed of a high molecular material in order to achieve flexibility, and one or more pods (insertion holes) 110 are formed by partially joining upper surface fusion-bonding sheet layers 130 and lower surface fusion-bonding sheet layers 140 constituting the flexible sleeve 120. Although the details will be described later, the conventional housing member has a problem that the upper surface fusion-bonding sheet layers 130 and the lower surface fusion-bonding sheet layers 140 need to be bonded to each other with a certain width.

On the other hand, in recent years, there has been a strong demand for space saving in the continuous moving body, and when a layout cannot be performed due to a large width of the flexible sleeve, it is necessary to reduce the number of insertion holes and to shorten a length in a width direction, and cables to be originally inserted into the reduced insertion holes have to be inserted into other flexible sleeves and arranged to overlap the plurality of flexible sleeves in a height direction.

The plurality of flexible sleeves arranged in this manner may be damaged by mutual friction due to movement such as sliding, more stable operation may be impaired due to friction or the like while synchronized movement is required, and quality stability may be extremely impaired.

Therefore, there has been a demand for the housing member that can prevent the cables used in the continuous moving body, such as a machine tool, an electronic device, an industrial robot, or a transport machine, from being damaged by protecting the cables and more stably supporting the cables, and that can achieve the space saving, has excellent durability, has high reliability, and can consequently reduce process errors due to dusts and the damage to the cables.

### SUMMARY OF INVENTION

### OBJECT TO BE ACHIEVED BY THE INVENTION

An object of the present invention is to provide a housing member that can prevent cables used in moving bodies, such as a machine tool, an electronic device, an industrial robot, and a transport machine, from being damaged by protecting the cables and more stably supporting the cables, thereby achieving space saving.

### MEANS FOR ACHIEVING THE OBJECT

In order to solve the problem, the present invention provides a housing member including: at least a first housing portion and a second housing portion adjacent to each other, in which an outer layer of the first housing portion and an outer layer of the second housing portion each include a first fusion-bonding member and a second fusion-bonding member that face each other, the first housing portion and the second housing portion include a first non-fusion-bonding member disposed between the first fusion-bonding member and the second fusion-bonding member, the first non-fusion-bonding member is fusion-bonded to the second fusion-bonding member of the first housing portion, and the first fusion-bonding member of the second housing portion, respectively, and a second non-fusion-bonding member and a third non-fusion-bonding member are fusion-bonded to the first fusion-bonding member of the first housing portion and the second fusion-bonding member of the second housing portion, respectively.

### BRIEF DESCRIPTION OF DRAWINGS

[Fig. 1] Fig. 1 is an overall perspective view schematically illustrating a continuous moving body in the conventional art.
[Fig. 2] (a) is a perspective view schematically illustrating a housing member in the conventional art, and (b) is a cross-sectional view schematically illustrating the housing member in the conventional art.
[Fig. 3] Fig. 3 is a diagram schematically illustrating a state before completion by heat treatment in order to describe the configuration in the conventional art.
[Fig. 4] (a) is a perspective view schematically illustrating a housing member according to a first embodiment, and (b) is a cross-sectional view schematically illustrating the housing member according to the first embodiment.
[Fig. 5] Fig. 5 is a diagram schematically illustrating a state before completion by heat treatment in order to describe the configuration of the first embodiment.
[Fig. 6] (a) is a perspective view schematically illustrating a housing member according to a second embodiment, and (b) is a cross-sectional view schematically illustrating the housing member according to the second embodiment.
[Fig. 7] Fig. 7 is a diagram schematically illustrating a state before completion by heat treatment in order to describe the configuration of the second embodiment.
[Fig. 8] (a) is a perspective view schematically illustrating a housing member according to a third embodiment, and (b) is a cross-sectional view schematically illustrating the housing member according to the third embodiment.
[Fig. 9] Fig. 9 is a diagram schematically illustrating a state before completion by heat treatment in order to describe the configuration of the third embodiment.
[Fig. 10] Fig. 10 is a flowchart illustrating a method for manufacturing a housing member according to the present invention.
[Fig. 11] Fig. 11 is a diagram schematically illustrating a device for manufacturing a housing member according to the present invention.
[Fig. 12] Fig. 12 is a diagram schematically illustrating an elongated body protection and guide device according to the present invention.
[Fig. 13] Fig. 13 is a diagram schematically illustrating a housing member according to the present invention.

### EMBODIMENTS FOR CARRYING OUT THE INVENTION

Hereinafter, preferred embodiments of the present invention will be described in detail. However, the present invention is not limited to the embodiments to be described here, and may be embodied in other forms. Rather, examples to be introduced herein are provided such that the disclosed contents are fully and completely achieved and the idea of the present invention is sufficiently transmitted to those skilled in the art. In the entire specification, the same reference numerals denote the same components.

The present invention is susceptible to various modifications and may take various forms, and the examples are described in detail herein. However, it should be understood that the present invention is not intended to be limited to specific disclosure forms, and includes all changes, equivalents, or alternatives included in the technical idea and the technical scope of the present invention. Similar reference numerals are used for similar components while describing the drawings. A first term, a second term, and the like may be used to describe various components, but the components should not be limited to the terms. The terms are used only for the purpose of distinguishing one component from other components. The terms used in the application of the present application are merely used to describe specific examples, and are not intended to limit the present invention. Expressions in the singular include expressions in the plural, unless the context clearly indicates otherwise. In the present application, it should be understood that the terms such as "include" and "perform" designate the presence of a feature, a number, a step, an operation, a component, and a part, or a combination thereof described in the specification, and the presence or addition possibility of one or more other features, numbers, steps, operations, components, and parts, or a combination thereof is not excluded in advance.

Unless otherwise defined, all terms used herein, including technical or scientific terms, have the same meanings as those generally understood by persons having ordinary knowledge in the field of the art to which the present invention belongs. Terms defined in commonly used dictionaries should be interpreted as having meanings consistent with meanings in the context of the related art, and should not be interpreted in idealized or overly formal meanings, unless clearly defined in the present application.

Hereinafter, the embodiments of the present invention will be described with reference to the accompanying drawings. The same reference numerals denote the same components regardless of the drawings. In examples, redundant description is omitted. In addition, the embodiments and the examples thereof will be described below, but the present invention is not limited thereto, and may be based on the above-described technical idea.

First, in order to clarify a difference from the present invention, the conventional art will be described. Figs. 1 to 3 are views conceptually illustrating a conventional housing member, Fig. 1 is a perspective view of an appearance of a continuous moving body in a state in which cables are inserted in a state in which a plurality of housing members are stacked in multiple stages, Fig. 2(a) is a perspective view schematically illustrating an appearance of a housing portion, and Fig. 2(b) is a cross-sectional view schematically illustrating a cross section of the housing member.

As illustrated in Figs. 1 and 2, a conventional continuous moving body 100 includes flexible sleeves (housing members) 120 each including insertion passages 110a (three in Fig. 2(b)) into which cables 110 (not illustrated in Fig. 2(b)) are respectively inserted. In Fig. 1, three flexible sleeves are stacked in multiple stages, and Fig. 2(b) illustrates one of the flexible sleeves. The flexible sleeve 120 includes upper surface fusion-bonding sheet layers 130 and lower surface fusion-bonding sheet layers 140, and insertion hole forming members 150a and 150b (three in Fig. 2(b)) interposed between the fusion-bonding sheet layers 130 and 140.

As illustrated in Fig. 2(b), the upper surface fusion-bonding sheet layer 130 and the lower surface fusion-bonding sheet layer 140 are sheet-like members each extending in a longitudinal direction (depth and front direction in Fig. 2(b)) that is a first direction, having a predetermined thickness in a height direction (up-down direction in Fig. 2(b)) that is a second direction, and having a predetermined width in a width direction (left-right direction in Fig. 2(b)). In addition, the upper surface fusion-bonding sheet layer 130 and the lower surface fusion-bonding sheet layer 140 are members (for example, polyurethane) that can be bonded to each other by heat treatment, and face each other in the height direction (up-down direction in Fig. 2(b)).

The insertion hole forming members 150a and 150b are tape-like members that extend in the longitudinal direction, respectively, and are formed of a material that can be bonded to the fusion-bonding sheet layers 130 and 140 by the heat treatment, but is not bonded to each other by the heat treatment, and two members formed of the same material, forming a pair in the height direction, face each other.

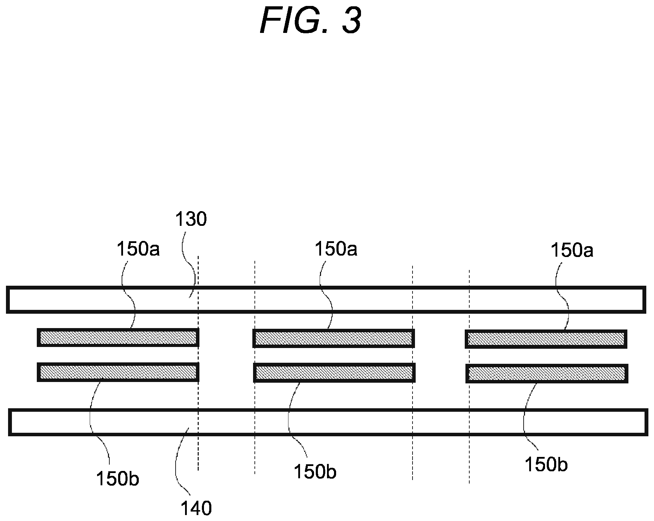

Fig. 3 is a cross-sectional view schematically illustrating a state before completion by the heat treatment in order to describe the housing member 100 having the above-described configuration. By being pressed from the state illustrated in Fig. 3 by the heat treatment from the height direction, portions between the facing fusion-bonding sheet layers 130 and 140 or portions between the facing fusion-bonding sheet layers 130 and 140 and the insertion hole forming members 150a and 150b are bonded, but portions between the facing insertion hole forming members 150a and 150b are not bonded to each other. Accordingly, the insertion hole 110a into which a cable or the like is inserted is formed in the portions between the insertion hole forming members 150a and 150b.

However, with such a configuration, in order to obtain the durability of the flexible sleeve (housing member) 120, it is necessary to secure bonding portions 135 (see Fig. 2(b)) between the fusion-bonding sheet layers 130 and 140 with a constant width (see a distance between broken lines in Fig. 3), and as the number of insertion holes is increased, the number and the width of bonding portions 135 are increased, which prevents space saving.

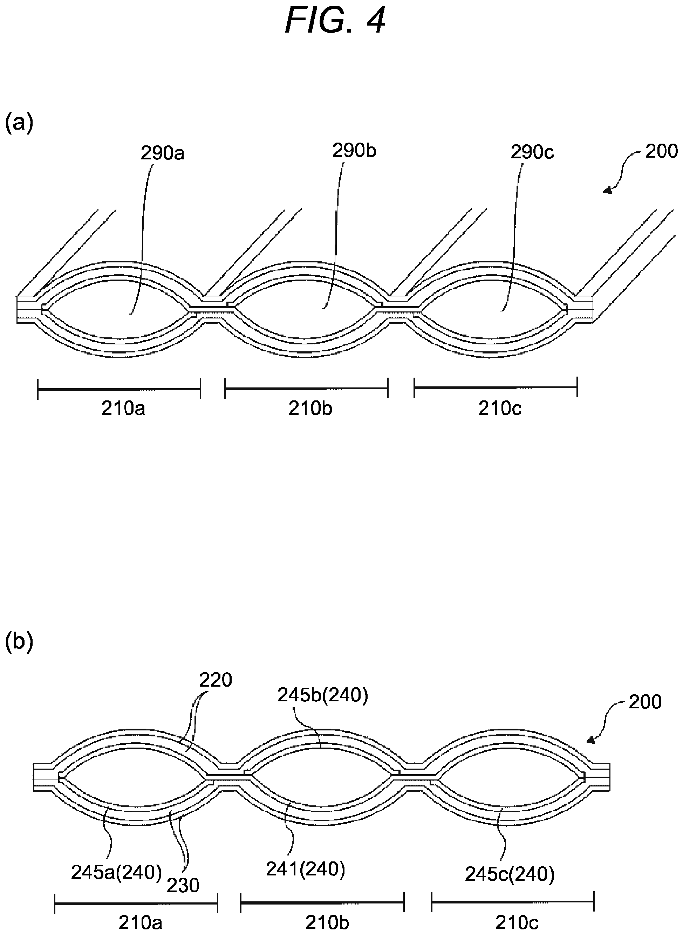

The embodiments of the present invention for solving the above-described problems will be described. Fig. 4 is a diagram schematically illustrating a first embodiment of the present invention and corresponds to Fig. 2. As illustrated in Fig. 4, the flexible sleeve (housing member) 200 according to the first embodiment includes insertion holes (three in Fig. 4) 290 into which cables or the like are respectively inserted. The flexible sleeve (housing member) 200 includes housing portions forming insertion holes 290a, 290b, and 290c and continuously arranged in parallel in the width direction (left-right direction in Fig. 4), and the flexible sleeve (housing member) 200 includes a first housing portion 210a, a second housing portion 210b, and a third housing portion 210c in the present embodiment.

The flexible sleeve 200 includes an upper surface fusion-bonding sheet layer 220 and a lower surface fusion-bonding sheet layer 230, and an insertion hole forming member 240 interposed between the fusion-bonding sheet layers 220 and 230.

As illustrated in Fig. 4(b), the upper surface fusion-bonding sheet layer 220 and the lower surface fusion-bonding sheet layer 230 are sheet-like members each extending in the longitudinal direction (depth and front direction in Fig. 4(b)) that is the first direction, having a predetermined thickness in the height direction (up-down direction in Fig. 4(b)) that is the second direction, and having a predetermined width in the width direction (left-right direction in Fig. 4(b)). In addition, the upper surface fusion-bonding sheet layer 220 and the lower surface fusion-bonding sheet layer 230 are members (for example, polyurethane) that can be bonded to each other by the heat treatment, and face each other in the height direction.

The insertion hole forming member 240 includes a base sheet member 241 (one in the present embodiment) and a plurality of tape members (second non-fusion-bonding member 245a, third non-fusion-bonding member 245b, and fourth non-fusion-bonding member 245c) corresponding to the number (three in the present embodiment) of insertion holes to be formed. The base sheet member (first non-fusion-bonding member) 241 and the tape members 245a, 245b, and 245c are formed of a material (for example, stretched polytetrafluoroethylene (hereinafter, referred to as "ePTFE")) which can be bonded to the fusion-bonding sheet layers 220 and 230 by the heat treatment, but is not bonded to each other by the heat treatment.

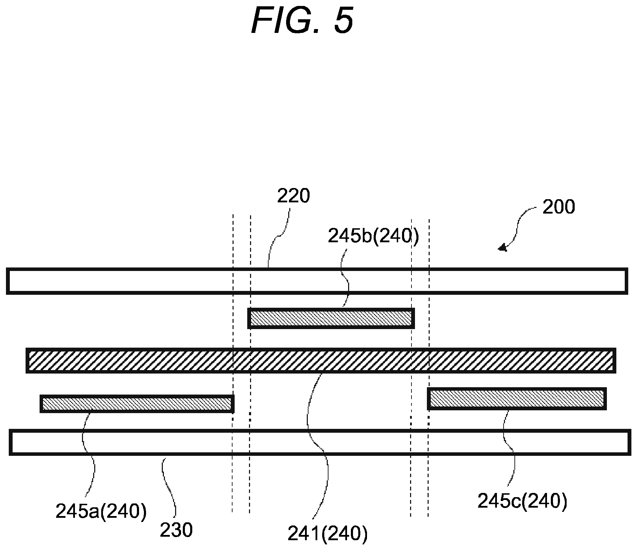

The base sheet member 241 has a width exceeding a width of the plurality of tape members 245. In addition, in the present embodiment, the plurality of tape members 245a, 245b, and 245c are arranged in parallel in a state of being alternately switched with respect to an upper surface and a lower surface of the base sheet member 241 (that is, the tape members 245 are arranged in order of a lower side, an upper side, and a lower side with respect to the base sheet member 241 in the height direction). The tape members 245 arranged in parallel are close to each other in the width direction at a distance shorter than that in the conventional art (see broken lines in Fig. 5).

Fig. 5 is a cross-sectional view schematically illustrating a state before completion by the heat treatment in order to describe the flexible sleeve (housing member) 200 having the above-described configuration. By being pressed from the state illustrated in Fig. 5 by the heat treatment from the height direction, portions between the facing fusion-bonding sheet layers 220 and 230 or portions between the facing fusion-bonding sheet layers 220 and 230 and the base sheet member 241 and the tape members 245 are bonded, but portions between the facing base sheet member 241 and tape members 245 are not bonded to each other. Accordingly, the insertion holes 290 into which the cables or the like are inserted are formed in the portions between the base sheet member 241 and the tape members 245.

According to the first embodiment having the above configuration, unlike the conventional art, the base sheet member 241 is paired with the plurality of tape members 245 to form the plurality of insertion holes 290. The base sheet member 241 is bonded to the fusion-bonding sheet layers 220 and 230 across the plurality of insertion holes 290. Therefore, a width of a bonding portion between fusion-bonding sheets provided between the housing portions as in the conventional art can be reduced to a shorter width, and thus an entire width of the flexible sleeve (housing member) 200 can be reduced, thereby achieving space saving.

In the present embodiment, the base sheet member 241 is paired with the plurality of tape members 245, and thus a product yield can be improved as compared with the conventional art. Specifically, in the conventional art, unless the insertion hole forming members of the same size to be paired are arranged without being shifted in the height direction, the width direction, and the longitudinal direction, the insertion holes do not have a desired shape, resulting in a lack of quality stability. On the other hand, in the present embodiment, the base sheet member 241 is paired with the plurality of tape members 245, and thus as long as the tape members 245 are disposed within a size of a front surface or a back surface of the base sheet member 241, the insertion holes can be formed, thereby improving the yield and enhancing the quality stability.

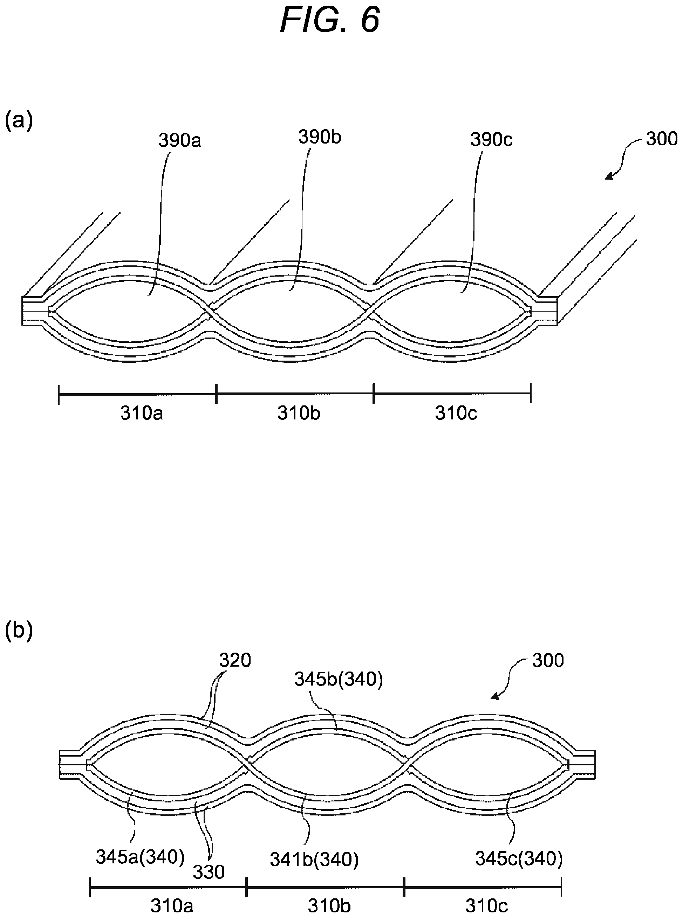

Next, a second embodiment of the present invention will be described. Fig. 6 is a diagram schematically illustrating a second embodiment of the present invention and corresponds to Fig. 2.

As illustrated in Fig. 4, a flexible sleeve (housing member) 300 according to the second embodiment includes insertion holes (three in Fig. 4) 390 into which cables or the like are respectively inserted. The flexible sleeve (housing member) 300 includes housing portions forming insertion holes 390a, 390b, and 390c and continuously arranged in parallel in the width direction (left-right direction in Fig. 4), and the flexible sleeve (housing member) 300 includes a first housing portion 310a, a second housing portion 310b, and a third housing portion 310c in the present embodiment.

The flexible sleeve 300 includes an upper surface fusion-bonding sheet layer 320 and a lower surface fusion-bonding sheet layer 330, and an insertion hole forming member 340 interposed between the fusion-bonding sheet layers 320 and 330.

As illustrated in Fig. 6(b), the upper surface fusion-bonding sheet layer 320 and the lower surface fusion-bonding sheet layer 330 are sheet-like members each extending in the longitudinal direction (depth and front direction in Fig. 6(b)) that is the first direction, having a predetermined thickness in the height direction (up-down direction in Fig. 6(b)) that is the second direction, and having a predetermined width in the width direction (left-right direction in Fig. 6(b)). In addition, the upper surface fusion-bonding sheet layer 320 and the lower surface fusion-bonding sheet layer 330 are members (for example, polyurethane) that can be bonded to each other by the heat treatment, and face each other in the height direction.

The insertion hole forming member 340 includes a base sheet member 341 (one in the present embodiment) and a plurality of tape members (second non-fusion-bonding member 345a, third non-fusion-bonding member 345b, and fourth non-fusion-bonding member 345c) corresponding to the number (three in the present embodiment) of insertion holes to be formed. The base sheet member (first non-fusion-bonding member) 341 and the tape members 345a, 345b, and 345c are formed of a material (for example, polytetrafluoroethylene (hereinafter, referred to as "PTFE")) which can be bonded to the fusion-bonding sheet layers 320 and 330 by the heat treatment, but is not bonded to each other by the heat treatment.

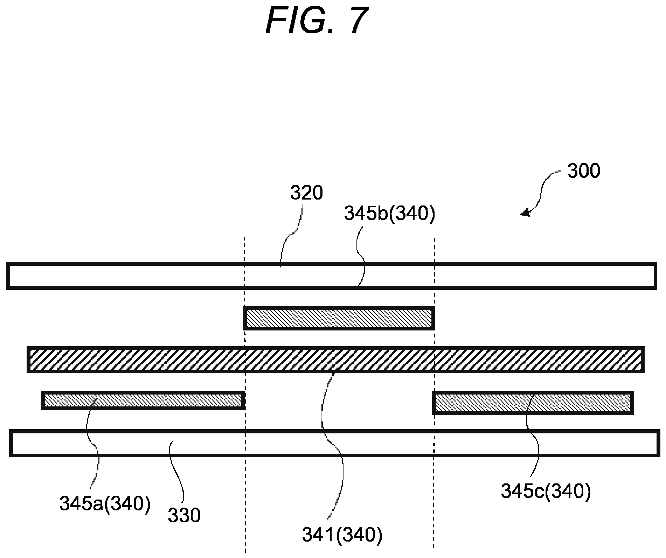

The base sheet member 341 has a width exceeding a width of the plurality of tape members 345. In addition, in the present embodiment, the plurality of tape members 345a, 345b, and 345c are arranged in parallel in a state of being alternately switched with respect to an upper surface and a lower surface of the base sheet member 341 (that is, the tape members 345 are arranged in order of a lower side, an upper side, and a lower side with respect to the base sheet member 341). Further, in the tape members 345 arranged in parallel, another end portion (right end portion in Fig. 6(b)) of one tape member in the width direction coincides with one end portion (left end portion in Fig. 6(b)) of another adjacent tape member in the width direction (That is, the tape members are arranged in parallel in the width direction without an interval therebetween. Refer to broken lines in Fig. 7), and the tape members 345a, 345b, and 345c form boundaries of the first housing portion 310a, the second housing portion 310b, and the third housing portion 310c, respectively.

Fig. 7 is a cross-sectional view schematically illustrating a state before completion by the heat treatment in order to describe the flexible sleeve (housing member) 300 having the above-described configuration. By being pressed from the state illustrated in Fig. 7 by the heat treatment from the height direction, portions between the facing fusion-bonding sheet layers 320 and 330 or portions between the facing fusion-bonding sheet layers 320 and 330 and the base sheet member 341 and the tape members 345 are bonded, but portions between the facing base sheet member 341 and the tape members 345 are not bonded to each other. Accordingly, the insertion holes 390 into which the cables or the like are inserted are formed in the portions between the base sheet member 341 and the tape members 345.

According to the second embodiment having the above configuration, unlike the conventional art, the base sheet member 341 is paired with the plurality of tape members 345 to form the plurality of insertion holes 390. The insertion hole 390 formed in this manner extends in the longitudinal direction, and includes a first arc portion having an arc cross-sectional shape that is convex upward with respect to the height direction, and a second arc portion having an arc cross-sectional shape that is convex downward with respect to the height direction, and a first insertion passage 390a is formed by one end and the other end of the first arc portion being integrated with one end and the other end of the second arc portion. In addition, the second housing portion extends in the longitudinal direction, and includes a third arc portion having an arc cross-sectional shape that is convex upward with respect to the height direction, and a fourth arc portion having an arc cross-sectional shape that is convex downward with respect to the height direction, and a second insertion passage 390b is formed by one end and the other end of the third arc portion being integrated with one end and the other end of the fourth arc portion. Further, the third housing portion extends in the longitudinal direction, and includes a fifth arc portion having an arc cross-sectional shape that is convex upward with respect to the height direction, and a sixth arc portion having an arc cross-sectional shape that is convex downward with respect to the height direction, and a third insertion passage 390c is formed by one end and the other end of the fifth arc portion being integrated with one end and the other end of the sixth arc portion. In the present embodiment, another end portion of the first housing portion in the width direction coincides with one end portion of the second housing portion in the width direction, and a relation between the second housing portion and the third housing portion is also the same. The base sheet member 341 is bonded to the fusion-bonding sheet layers 320 and 330 across the plurality of insertion holes 390. Therefore, a width of a bonding portion between fusion-bonding sheets provided between the housing portions as in the conventional art can be reduced to a further shorter width than in the first embodiment, and thus an entire width of the flexible sleeve (housing member) 300 can be reduced, thereby achieving space saving.

In the present embodiment, the base sheet member 341 is paired with the plurality of tape members 345, and thus a product yield can be improved as compared with the conventional art. Specifically, in the conventional art, unless the insertion hole forming members of the same size to be paired are arranged without being shifted in the height direction, the width direction, and the longitudinal direction, the insertion holes do not have a desired shape, resulting in a lack of quality stability. On the other hand, in the present embodiment, the base sheet member 341 is paired with the plurality of tape members 345, and thus as long as the tape members 345 are disposed within a size of a front surface or a back surface of the base sheet member 241, the insertion holes can be formed, thereby improving the yield and enhancing the quality stability.

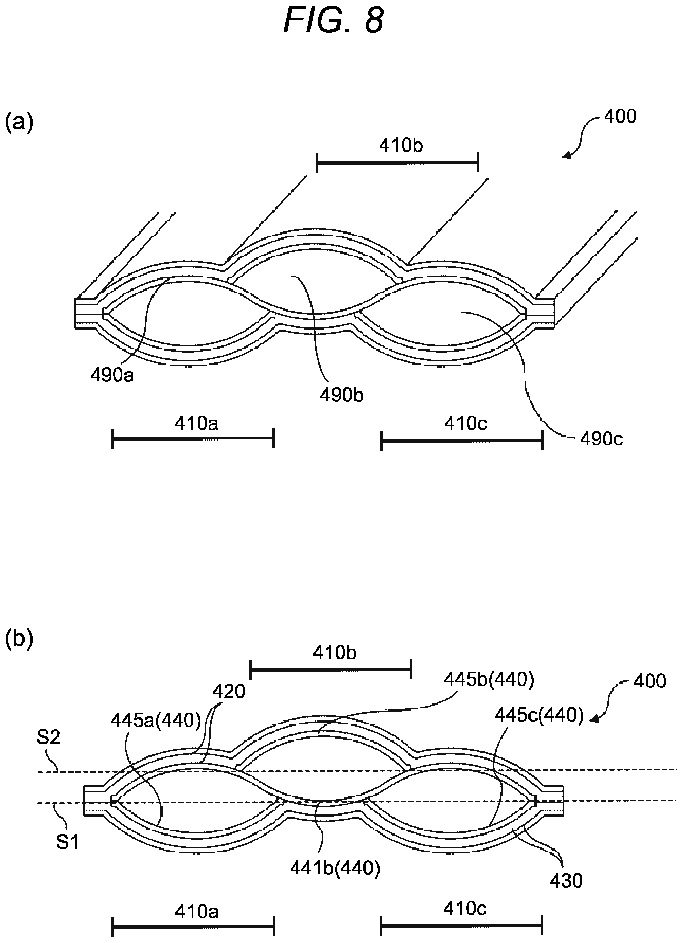

Next, a third embodiment of the present invention will be described. Fig. 8 is a diagram schematically illustrating the third embodiment of the present invention and corresponds to Fig. 2.

As illustrated in Fig. 8, a flexible sleeve (housing member) 400 according to the third embodiment includes insertion holes (three in Fig. 8) 490 into which cables or the like are respectively inserted. The flexible sleeve (housing member) 400 includes housing portions forming insertion holes 490a, 490b, and 490c and continuously arranged in parallel in the width direction (left-right direction in Fig. 8), and the flexible sleeve (housing member) 400 includes a first housing portion 410a, a second housing portion 410b, and a third housing portion 410c in the present embodiment.

The flexible sleeve 400 includes an upper surface fusion-bonding sheet layer 420 and a lower surface fusion-bonding sheet layer 430, and an insertion hole forming member 440 interposed between the fusion-bonding sheet layers 420 and 430.

As illustrated in Fig. 8(b), the upper surface fusion-bonding sheet layer 420 and the lower surface fusion-bonding sheet layer 430 are sheet-like members each extending in the longitudinal direction (depth and front direction in Fig. 8(b)) that is the first direction, having a predetermined thickness in the height direction (up-down direction in Fig. 8(b)) that is the second direction, and having a predetermined width in the width direction (left-right direction in Fig. 8(b)). In addition, the upper surface fusion-bonding sheet layer 420 and the lower surface fusion-bonding sheet layer 430 are members (for example, polyurethane) that can be bonded to each other by the heat treatment, and face each other in the height direction.

The insertion hole forming member 440 includes a base sheet member 441 (one in the present embodiment) and a plurality of tape members (second non-fusion-bonding member 445a, third non-fusion-bonding member 445b, and fourth non-fusion-bonding member 445c) corresponding to the number (three in the present embodiment) of insertion holes to be formed. The base sheet member (first non-fusion-bonding member) 441 and the tape members 445a, 445b, and 445c are formed of a material (for example, polytetrafluoroethylene (hereinafter, referred to as "PTFE")) which can be bonded to the fusion-bonding sheet layers 420 and 430 by the heat treatment, but is not bonded to each other by the heat treatment.

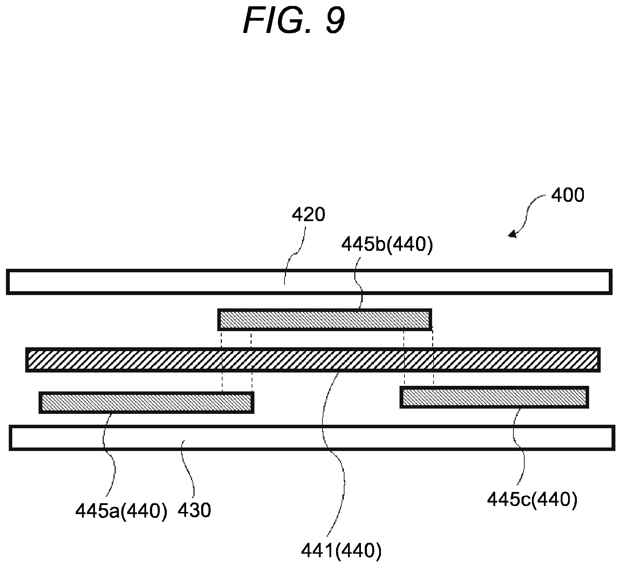

The base sheet member 441 has a width exceeding a width of the plurality of tape members 445. In addition, in the present embodiment, the plurality of tape members 445a, 445b, and 445c are arranged in parallel in a state of being alternately switched with respect to an upper surface and a lower surface of the base sheet member 441 (that is, the tape members 445 are arranged in order of a lower side, an upper side, and a lower side with respect to the base sheet member 441). In addition, in the tape members 445 arranged in parallel, another end portion (right end portion in Fig. 8(b)) of one tape member overlaps one end portion (left end portion in Fig. 8(b)) of another adjacent tape member in the width direction (That is, the tape members are arranged in parallel in a state of partially overlapping each other in the width direction. Refer to broken lines in Fig. 9).

In the present embodiment, straight lines S1 and S2 (see broken lines in Fig. 8(b)) passing through one end portion and the other end portion in the width direction when the adjacent housing portions (for example, the first housing portion 410a and the second housing portion 410b) are viewed in cross section do not coincide with each other.

Fig. 9 is a cross-sectional view schematically illustrating a state before completion by the heat treatment in order to describe the flexible sleeve (housing member) 400 having the above-described configuration. By being pressed from the state illustrated in Fig. 9 by the heat treatment from the height direction, portions between the facing fusion-bonding sheet layers 420 and 430 or portions between the facing fusion-bonding sheet layers 420 and 430 and the base sheet member 441 and the tape members 445 are bonded, but portions between the facing base sheet member 441 and tape members 445 are not bonded to each other. Accordingly, the insertion holes 490 into which the cables or the like are inserted are formed in the portions between the base sheet member 441 and the tape members 445.

According to the second embodiment having the above configuration, unlike the conventional art, the base sheet member 441 is paired with the plurality of tape members 445 to form the plurality of insertion holes 490. The base sheet member 441 is bonded to the fusion-bonding sheet layers 420 and 430 across the plurality of insertion holes 490. Therefore, the width of the bonding portion between the fusion-bonding sheets provided between the housing portions as in the conventional art can be reduced to a further shorter width than in the first embodiment and the second embodiment, and thus an entire width of the flexible sleeve (housing member) 400 can be reduced, thereby achieving space saving.

In the present embodiment, the base sheet member 441 is paired with the plurality of tape members 445, and thus a product yield can be improved as compared with the conventional art. Specifically, in the conventional art, unless the insertion hole forming members of the same size to be paired are arranged without being shifted in the height direction, the width direction, and the longitudinal direction, the insertion holes do not have a desired shape, resulting in a lack of quality stability. On the other hand, in the present embodiment, the base sheet member 441 is paired with the plurality of tape members 445, and thus as long as the tape members 445 are disposed within a size of a front surface or a back surface of the base sheet member 441, the insertion holes can be formed, thereby improving the yield and enhancing the quality stability.

In the above-described first to third embodiments, polyurethane is exemplified as a material of a fusion-bonding layer, but the material is naturally not limited thereto, and polyurethane-based, thermoplastic polyurethane-based, polyethersulfone-based, polyamide-based, and ethylene-vinyl acetate-based hot melts can be used as the material.

In addition, in the above-described first to third embodiments, PTFE is exemplified as a material of a non-fusion-bonding layer, but the material is naturally not limited thereto, and any material may be used as long as the material, such as a nonwoven fabric, can be bonded to the material of the fusion-bonding layer and the non-fusion-bonding layers are not bonded to each other.

In the above-described first to third embodiments, the number of insertion holes is three as an example, but the number is naturally not limited thereto, it is sufficient to have at least two insertion holes, and the larger the number of insertion holes, the smaller the entire width can be.

In the above-described first to third embodiments, the housing portions having the same size have been described as an example, but the size of the housing portions is naturally not limited thereto, and the adjacent housing portions may have different sizes. Accordingly, the housing portion can house not only cables having different sizes but also any desired number of cables.

Further, the housing member of the first to third embodiments may be provided with a jacket layer formed of the same material as the non-fusion-bonding layer on an outer side of the fusion-bonding sheet.

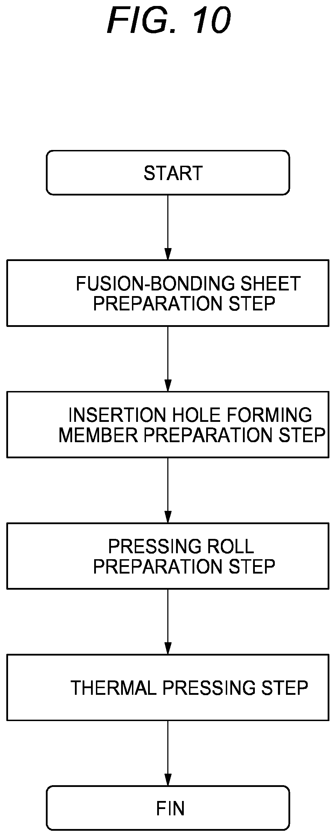

Next, a manufacturing method of the present invention will be described. Fig. 10 is a flowchart illustrating an outline of the manufacturing method. As illustrated in Fig. 10, the housing member of the present invention first includes a fusion-bonding sheet preparation step of preparing a fusion-bonding sheet. In the fusion-bonding sheet preparation step, a sheet-like upper fusion-bonding sheet member having a predetermined width and extending in the longitudinal direction and a lower fusion-bonding sheet member having the same size as the upper fusion-bonding sheet member are prepared. The upper fusion-bonding sheet member and the lower fusion-bonding sheet member are members that can be bonded to each other by the heat treatment, and can be bonded to the insertion hole forming members to be described later by the heat treatment, and for example, FEP can be used as the material.

Next, an insertion hole forming member preparation step of preparing a member for forming an insertion hole in a housing member is performed. In the insertion hole forming member preparation step, a base sheet member and a plurality of tape members are prepared. A sheet-like base sheet member having a width slightly smaller than that of the upper fusion-bonding sheet member and the lower fusion-bonding sheet member is prepared. The base sheet member is a member that can be bonded to the above-described cover portion by the heat treatment, but cannot be bonded to the tape members by the heat treatment, and for example, stretched PTFE can be used as the material.

In addition, a plurality of tape-like tape members extending in the longitudinal direction and each having a width smaller than that of the base sheet member are prepared. The tape member is a member that can be bonded to the above-described cover portion by the heat treatment, but cannot be bonded to the base sheet member by the heat treatment, and for example, the stretched PTFE can be used as the material.

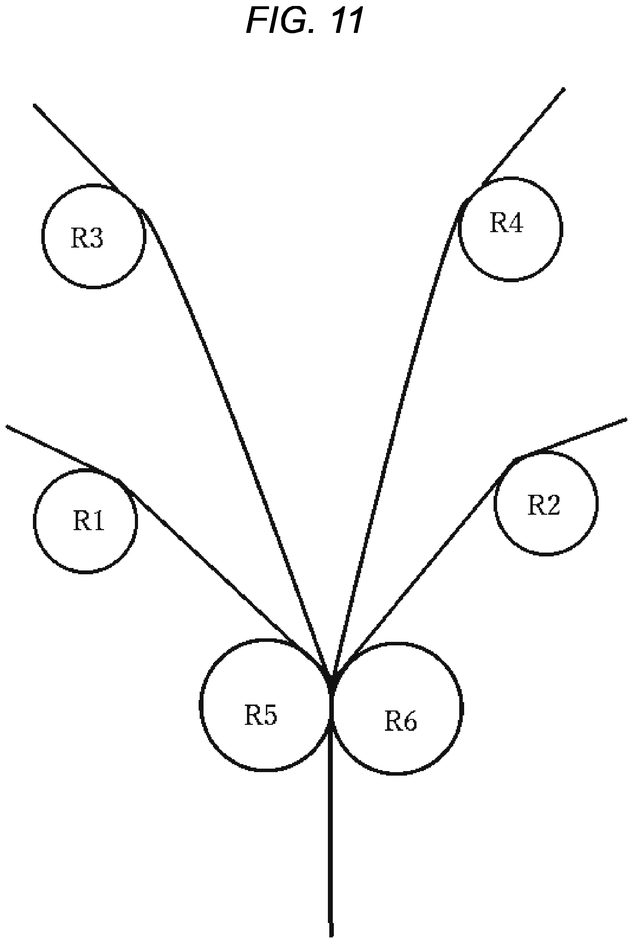

Next, a pressing roll for thermally pressing the fusion-bonding sheet and the insertion hole forming member is prepared. In the pressing roll preparation step, as schematically illustrated in Fig. 11, first, the upper fusion-bonding sheet member and the lower fusion-bonding sheet member are set on two cover portion rolls R1 and R2 that feed out the upper fusion-bonding sheet member and the lower fusion-bonding sheet member, respectively, in a state in which the upper fusion-bonding sheet member and the lower fusion-bonding sheet member face each other, and the base sheet portion and the tape portions are set on two insertion hole forming member rolls R3 and R4 that feed out the base sheet portion and the tape portions, respectively, in a state in which the base sheet portion and the tape portions face each other and in a state in which the base sheet portion and the tape portions are inserted between the upper fusion-bonding sheet member and the lower fusion-bonding sheet member, such that the non-fusion-bonding sheets are disposed, such that the non-fusion-bonding sheets partially overlap in the width direction (configuration of the third embodiment), one end of one non-fusion-bonding sheet and the other end of another non-fusion-bonding sheet coincide with each other (configuration of the second embodiment), or the non-fusion-bonding sheets are spaced apart from each other by a predetermined interval (configuration of the first embodiment) (non-fusion-bonding sheet disposing step).

In order to integrate the cover portions fed out in this state and the insertion hole forming members, the housing member is manufactured by passing the cover portions and the insertion hole forming members in a thermal pressing step through pressing rolls R5 and R6.

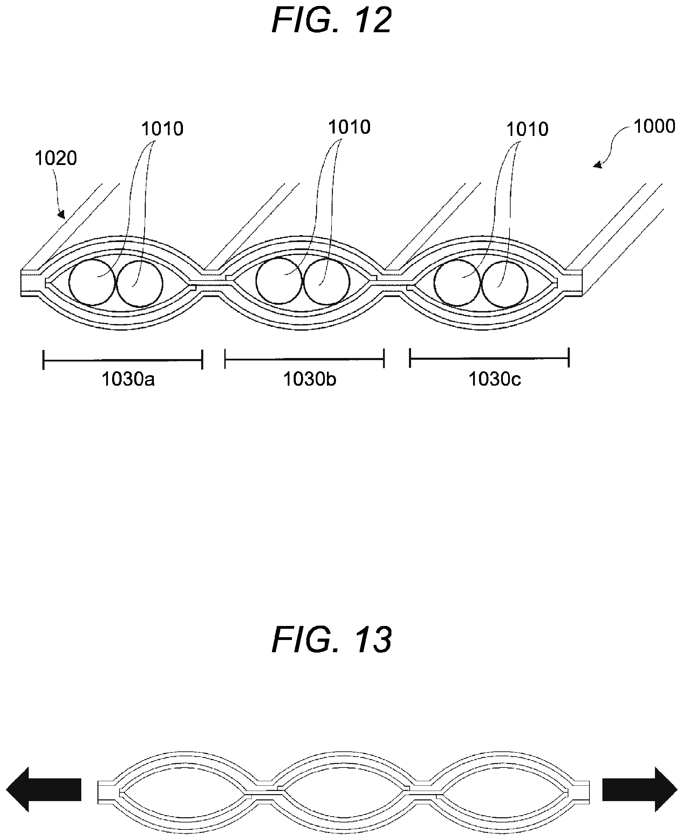

Next, an elongated body protection and guide device using the housing member will be described. As illustrated in Fig. 12, an elongated body protection and guide device 1000 includes elongated bodies 1010 (six in the present description), such as a cable or a tube, and a housing member 1020, and the housing member 1020 includes three tubular housing portions 1030a, 1030b, and 1030c. The tubular housing portions have substantially the same size, and are adjacent to or overlap one another in the width direction of the housing member over an entire length. In Fig. 12, the housing member according to the first embodiment is described, but the present invention is not limited thereto, and, with respect to a distance between the housing members arranged in parallel, the housing member according to the second embodiment or the third embodiment may be used instead. When the first embodiment is used, a distance between two adjacent housing portions of the housing member is such that the adjacent housing portions are adjacent to each other, when the second embodiment is used, a distance between two adjacent housing portions of the housing member is such that the adjacent housing portions are close to each other, and when the second embodiment is used, a distance between two adjacent housing portions of the housing member is such that the adjacent housing portions overlap each other.

In order to more clearly specify the configuration of the housing member, as illustrated in Fig. 13, the housing member according to the present invention may be such that, when only the housing member is prepared, one end portion and the other end portion of the housing member in the width direction are clamped in the thickness direction and pulled in the width direction, respectively, so as to eliminate slack in the width direction, adjacent ones of the tubular housing portions may be positioned close to, adjacent to, or overlapping each other in the width direction.

## Claims

1. A housing member comprising:
at least a first housing portion and a second housing portion adjacent to each other, wherein
an outer layer of the first housing portion and an outer layer of the second housing portion each include a first fusion-bonding member and a second fusion-bonding member that face each other, and the first housing portion and the second housing portion include a first non-fusion-bonding member disposed between the first fusion-bonding member and the second fusion-bonding member,
the first non-fusion-bonding member is fusion-bonded to the second fusion-bonding member of the first housing portion, and the first fusion-bonding member of the second housing portion, respectively, and
a second non-fusion-bonding member and a third non-fusion-bonding member are fusion-bonded to the first fusion-bonding member of the first housing portion and the second fusion-bonding member of the second housing portion, respectively.

2. A housing member comprising:
at least a first housing portion and a second housing portion adjacent to each other, wherein
an outer layer of the first housing portion and an outer layer of the second housing portion each include a first fusion-bonding member and a second fusion-bonding member that face each other,
the first housing portion and the second housing portion include a first non-fusion-bonding member and a second non-fusion-bonding member disposed between the first fusion-bonding member and the second fusion-bonding member,
a part of the first non-fusion-bonding member and a part of the second non-fusion-bonding member are fusion-bonded to the first fusion-bonding member and the second fusion-bonding member, respectively, and
a part of the first non-fusion-bonding member or a part of the second non-fusion-bonding member forms a boundary between the first housing portion and the second housing portion.

3. A housing member comprising:
at least a first housing portion and a second housing portion adjacent to each other, wherein
the first housing portion extends in a first direction that is a longitudinal direction, and includes a first arc portion having an arc cross-sectional shape that is convex upward with respect to a second direction that is a height direction orthogonal to the first direction, and a second arc portion having an arc cross-sectional shape that is convex downward with respect to the second direction, and includes a first insertion passage formed by one end and the other end of the first arc portion being integrated with one end and the other end of the second arc portion,
the second housing portion extends in the first direction, and includes a third arc portion having an arc cross-sectional shape that is convex upward with respect to the second direction, and a fourth arc portion having an arc shape that is convex downward with respect to the second direction, and includes a second insertion passage formed by one end and the other end of the third arc portion being integrated with one end and the other end of the fourth arc portion, and
another end portion of the first housing portion in a third direction that is a width direction orthogonal to the first direction coincides with one end portion of the second housing portion in the third direction, or is in contact with the second housing portion on one end portion side of the second housing portion in the third direction with respect to the one end portion of the second housing portion in the third direction.

4. A housing member comprising:
a first housing portion and a second housing portion each extending in a first direction that is a longitudinal direction, wherein
the first housing portion and the second housing portion include a first insertion passage and a second insertion passage, each having an elongated spheroidal cross-sectional shape in a second direction that is a height direction orthogonal to the first direction, respectively, and
a straight line S1 passing through one end portion and the other end portion of the first insertion passage in a third direction that is a width direction orthogonal to the first direction, and a straight line S2 passing through one end portion and the other end portion of the second insertion passage in the third direction do not coincide with each other.

5. An elongated body protection and guide device comprising:
an elongated body; and
a housing member, wherein
the housing member includes a plurality of tubular housing portions, and
the plurality of tubular housing portions have substantially a same size, and are adjacent to one another or overlap one another in a width direction of the housing member over an entire length.

6. A housing member comprising:
a plurality of tubular housing portions, wherein
in a state in which one end portion and the other end portion of the housing member in a width direction are clamped in a thickness direction and pulled in the width direction, respectively, so as to eliminate slack in the width direction, adjacent ones of the tubular housing portions are positioned close to, adjacent to, or overlapping each other in the width direction.

7. A method for manufacturing a housing member comprising:
a fusion-bonding sheet preparation step of preparing two fusion-bonding sheets having fusion-bonding properties;
a first non-fusion-bonding sheet preparation step of preparing two first non-fusion-bonding sheets having non-fusion-bonding properties;
a second non-fusion-bonding sheet preparation step of preparing second non-fusion-bonding sheets having non-fusion-bonding properties;
a non-fusion-bonding sheet disposing step of disposing the first non-fusion-bonding sheets between the two fusion-bonding sheets, and disposing two of the second non-fusion-bonding sheets on a front surface and a back surface of the first non-fusion-bonding sheet, respectively, such that the two second non-fusion-bonding sheets partially overlap in a width direction, one end of one second non-fusion-bonding sheet and the other end of the other second non-fusion-bonding sheet coincide with each other, or the second non-fusion-bonding sheets are spaced apart from each other by a predetermined interval; and
a fusion-bonding step of fusion-bonding the fusion-bonding sheets by performing heating in a state in which the non-fusion-bonding sheets are disposed in the non-fusion-bonding sheet disposing step.
